# EUROPEAN PATENT SPECIFICATION

(11) **EP 1 191 242 B1**
(45) Date of publication and mention of the grant of the patent: **29.08.2007**
(21) Application number: 00250304.3
(22) Date of filing: 14.09.2000
(51) Int. Cl.: F16C 29/00, B65G 13/06

(54) **Ball-type anti-friction device**
Wälzlagervorrichtung
Dispositif de palier à roulement

(43) Date of publication of application: 27.03.2002
(73) Proprietor: MASCIARELLI, Camillo A., Jr., Marlboro, MA 01752 (US)
(72) Inventor: MASCIARELLI, Camillo A., Jr., Marlboro, MA 01752 (US)
(74) Representative: Schubert, Klemens

(56) References cited:
- EP-A- 0 387 168
- DE-A- 3 212 793
- US-A- 4 108 455
- US-A- 4 347 794
- US-A- 4 660 994

## Description

### BACKGROUND OF THE INVENTION

The present invention is directed to an anti-friction device with the use with material handling equipment, such as conveyors, work benches, work stations, carts, feed stations, or any equipment in which it is desirable to be able to use ball-type anti-friction elements to provide for change of direction of an object, moving along a conveyor or to provide a table on which an object can be moved and rotated to a desired orientation. A typical ball-type anti-friction device includes a housing which contains a relatively large ball that is supported on a plurality of smaller balls which enable the larger ball to rotate in any direction. The larger ball and smaller balls are mounted in a ball cage which is movably mounted within the housing for positioning the larger ball in either an inactive position in which the larger ball is below the upper surface of the housing and in an active position in which the larger ball extends above the upper surface of the housing. The movement of the ball cage is controlled by fluid drive means and biasing means.

The ball-type anti-friction device is improved by an actuating system for selectively positioning the larger ball in its lowered inactive position or in its raised active position.

The U.S. Patent No. 4,732,490 discloses, cf. preamble of claim 1, a ball element for use in material handling equipment in which a rotatable ball is movable by a pneumatic piston from a first to a second position relative to a friction surface.

C. Masciarelli (U.S. Patent No. 4,660,994) discloses, cf. preamble of claim 1, a ball element for use in material handling equipment in which a rotatable ball is movable by a pneumatic piston from a first to a second position relative to a friction surface.

Further an apparatus for inserting metal moulds into a press and holding apparatus for carrying out the process is described in the DE 3 212 793.

### BRIEF SUMMARY OF THE INVENTION

The present invention defined by claim 1 consists of ball-type anti-friction device which has a housing, a ball cage mounted within the housing for movement relative to the housing between a lower inactive position and an upper active position. The ball cage contains a relatively large ball which may be mounted on relatively small bearing balls. When the ball cage is in the lower or inactive position, the large ball is below the top surface of the housing and when the ball cage is in the upper or active position, the ball extends above the top surface of the housing.

In a first embodiment of the invention, the housing contains a double acting fluid drive system. The fluid drive system includes two fluid chambers and a piston connected to the ball cage. The piston is selectively actuated by selective pressurization of the two fluid chambers.

In a second embodiment of the invention, the ball cage is actuated by a single acting fluid drive system. A piston is connected to the ball cage and is biased downwardly to normally maintain the ball cage and large batt in the lower or inactive position. The housing contains a single fluid chamber which, when pressurized, causes the ball cage and large ball to move to the active or upper position in opposition to the biasing means.

### BRIEF DESCRIPTION OF THE DRAWINGS

The character of the invention, however, may be best understood by reference to the accompanying drawings, in which:
FIG. 1 is an isometric perspective view of a first embodiment of a ball-type of anti-friction device, embodying the principles of the present invention;
FIG**.** 2 is a vertical cross-sectional view of the device of FIG. 1, showing the device in the inactive position;
FIG. 3 is a view similar to FIG. 2, showing the device in the active position;
FIG. 4 is an isometric view of a second embodiment of the invention;
PIG. 5 is a vertical cross-sectional view of the second embodiment, showing the device in the inactive position; and
FIG. 6 is a view similar to FIG. 5, showing the device of the second embodiment in the active position.

### DETAILED DESCRIPTION OF THE INVENTION

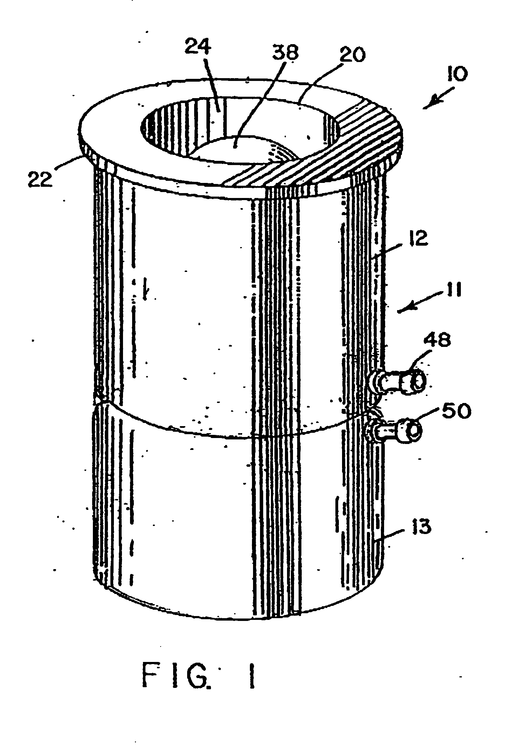

Referring first to FIGS. 1-3, there is shown a first embodiment of a ball-type anti-friction device of the present invention generally indicated by the reference numeral 10. The anti-friction device 10 comprises a housing generally indicated by the reference numeral 11 which contains a ball cage, generally indicated by the reference numeral 24, and a piston, generally indicated by the reference numeral 26. The housing 11 consists of an upper can-shaped portion welded or bonded to a lower can-shaped portion. The abutting ends of the two can-shaped portions define a divider wall 14. The upper can-shaped portion has a tubular cylindrical side wall 12. The lower can-shaped portion has a tubular cylindrical side wall 13. The side wall 12 defines an upper bore 16, having a top opening 20. The upper end of the side wall 12 has an annular outwardly facing horizontal flange 22. The cylindrical side wall 13 defines a lower bore 18.

The ball cage 24 comprises a cylindrical side wall 28 which lies within the side wall 12 in sliding relationship therewith, and a bottom wall 30 which has a central aperture 43. The ball cage 24 also includes a platform 32 spaced from the bottom wall 30. The platform 32 has an upper concave surface 34 which supports a plurality of small bearing balls 36 which, in turn, support a large ball 38. The small balls 36 and the large ball 38 are located within an upper cavity 40 which is defined by the cylindrical side wall 28. The upper end of the side wall 28 has an inwardly extending annular flange 41 which defines a top opening 42. The top opening 42 has a smaller diameter then that of the large ball 38 for retaining the ball 38 within the chamber 40. Small balls 36 enable the large ball 38 to roll in that direction relative to the ball cage 24.

The piston 26 includes a wall 27 which has a central aperture 47 and a stud 29 which extends through the aperture 47. The upper end of the stud 29 has a disk-shaped head 31 which is located snugly between the bottom wall 30 and the platform 32 so that the piston 26 is fixed relative to the ball cage 24. The lower end of the stud 29 has an annular groove 35 for receiving a retaining ring 37 for retaining the lower end of the stud 29 beneath the wall 27. The walls 30 and 14 define an upper fluid chamber 44. The walls 14 and 27 define a lower fluid chamber 46. An upper fluid fixture 48 is connected to the upper chamber 44. A lower fluid fixture 50 is connected to the lower chamber 46. An upper sealing ring 52 is located within the upper fluid chamber 44 for maintaining a fluid seal between the cylindrical wall 28 of the ball cage and the cylindrical wall 12 of the housing. An intermediate sealing ring 54 is located above the wall 14 about the stud 29 to provide a fluid seal between the upper fluid chamber 44 and the lower fluid chamber 46. A lower sealing ring 56 is located in the lower fluid chamber 46 to provide a fluid seal between the piston 26 and the cylindrical wall 13 of the housing.

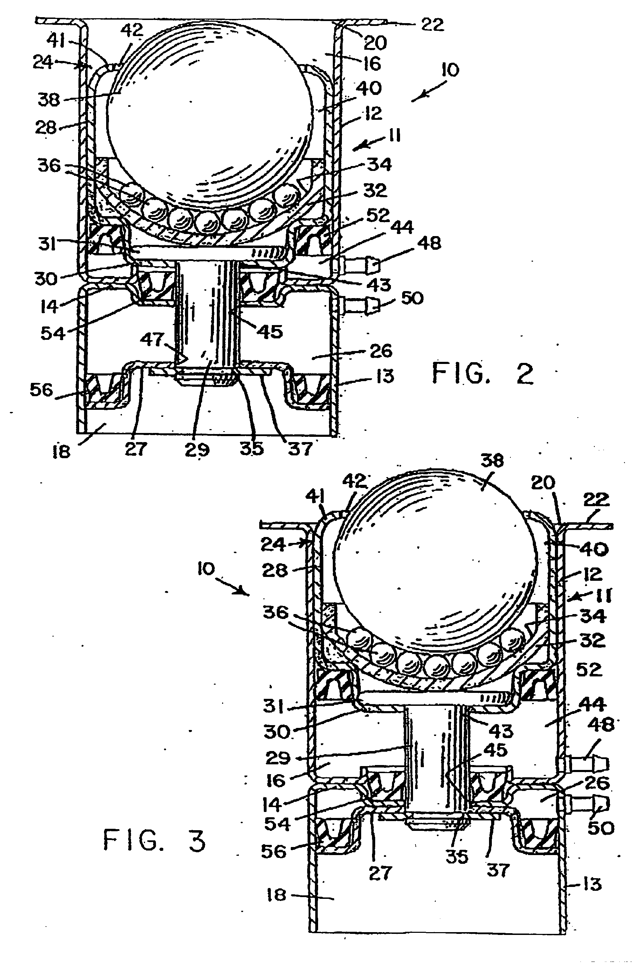

The anti-friction device 10 is located in its normal inactive position as shown in FIG. 2, wherein the upper fluid chamber 44 is depressurized and the lower fluid chamber 46 is pressurized. This maintains the piston 26 in its lower position as shown in FIG. 2, so that the top of die large ball 38 is below the upper surface of the flange 22. The anti-friction device 11 is actuated to its active position by depressurizing the lower fluid chamber 46 and pressurizing the upper fluid chamber 44. This causes the piston 26 to move upwardly relative to the housing 11 so that the top of the ball extends above the upper surface of the flange 22, as shown in PIG. 3.

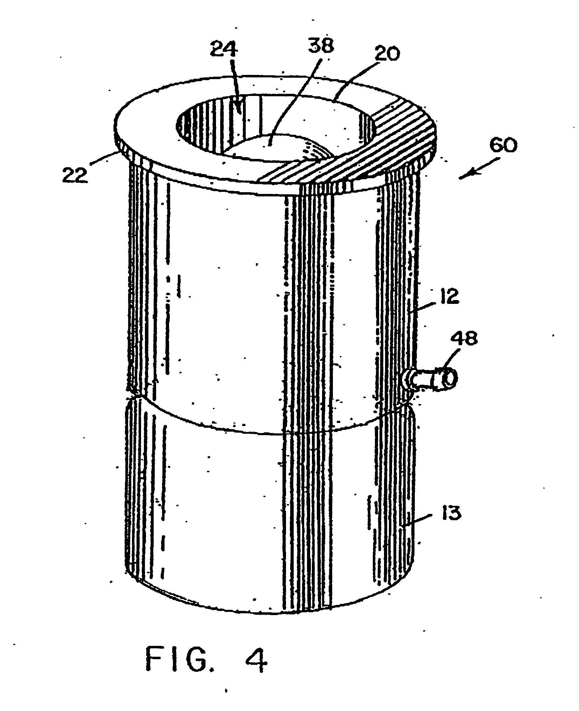

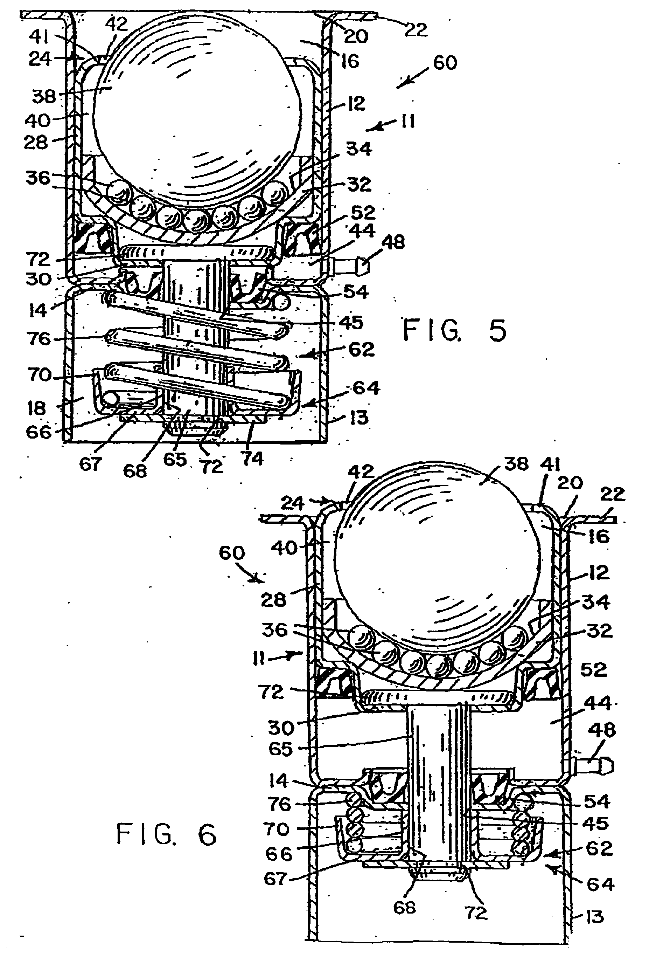

Referring to FIGS. 4-6, there is shown a second embodiment of a ball-type anti-friction device of the present invention and generally indicated by the reference numeral 60. The anti-friction device 60 includes the same housing 11 which has been described in connection with the first embodiment 10, except that it does not include the lower fluid fixture 50. The second embodiment 60 also includes the ball carriage 24, small balls 36, and large ball 38 which form part of the first embodiment 10. The second embodiment 60 differs; from the first embodiment 10 primarily in the details of the fluid piston. The fluid piston of the second embodiment 60 is generally indicated by the reference numeral 62 and includes a toroidal-shaped cup, generally indicated by the reference numeral 64, and a stud 65. The toroidal-shaped cup 64 bas a cylindrical inner wall 66 which has a central bore 68 and a generally cylindrical outer wall 70 which is concentric with the inner wall 66. Stud 65 extends through the apertures 68 and has a head portion 72 which lies snugly between the upper wall 30 and the platform 32. The lower end of the stud 65 has an annular groove 72 for receiving a retaining ring 74 for maintaining the lower end of the stud 65 below the bottom wall 67 of the cup 64. A compression spring 76 surrounds the stud 65. The lower end of the compression spring 76 lies between the outer and inner walls 70 and 66, respectively. The spring 76 extends from the bottom wall 67 of the cup 64 to the divider wall 14 of the housing and normally bias the cup 64 to the lower position which positions the larger ball 38 below the upper surface of the flange 22 as shown in FIG. 5. The anti-friction device 60 is rendered to its active position by pressurizing the upper fluid chamber 44. This forces the ball cage 24 upwardly against the bias of the spring 76. Since the piston 65 is fixed relative to the ball cage 24, the piston 65 also moves upwardly and compresses the spring 76, as shown in FIG. 6. When the ball cage 24 is in its outer position, as shown in FIG. 6, the ball 38 extends above the upper surface of the flange 22. The seals 52 and 54 are retained in the second embodiment 60 and function in the same manner as the seals 52 and 54 in the first embodiment 10. The second embodiment 60 does not require the lower seal 56.

## Claims

1. A ball-type anti-friction mechanism (10, 60) comprising:
a housing (11), said housing (11) having a side wall (12), a chamber (16), and a top opening (20) to said chamber (16) ;
a ball cage (24) mounted within said chamber (16) for movement between a lower position and an upper position, said ball cage (24) having an upper opening (42);
a ball (38) mounted for universal rotation within said ball cage (24) so that a minor portion of said ball (38) extends above said upper opening (42), said ball (38) being below said top opening (20) when said ball cage (24) is in said lower position and a minor portion of said ball (38) being above said top opening (20) when said ball cage (24) is in said upper position;
a fluid actuator for selectively positioning said ball cage (24) in one of said upper and lower positions; and
a first sealing ring (52) positioned between said ball cage (24) and said side wall (12) of said housing (11) for forming a sliding seal between said ball cage (24) and said side wall (12),
**characterized in that** said side wall (12) is single piece made with a flange (22) that extends outwardly at said top opening opening (20) and still further **characterized in that** a platform (32) is positioned between said ball cage (24) and said ball (38) for use in supporting said ball (38).

2. A ball-type anti-friction mechanism as claimed in claim 1, wherein said housing (11) further has a horizontal bottom wall (14) which has a vertical aperture; wherein said ball cage (24) defines a compressing chamber (44) between said horizontal bottom wall (14) and said ball cage (24); and wherein said fluid actuator comprises
(1) a piston (62) which is slidably mounted in the aperture of said horizontal bottom wall (14), said piston (62) having a lower end and an upper end, said upper end being fixed to said ball cage (24) ;
(2) a fluid fixture (48) operatively connected to said compression chamber for moving said ball cage to said upper position; and
(3) a return actuator (76) for moving said ball cage (24) to said lower position.

3. A ball-type anti-friction mechanism as claimed in claim 1 wherein said fluid actuator comprises a double action fluid actuated piston and cylinder mechanism.

4. A ball-type anti-friction mechanism as recited in claim 3, wherein said double acting piston and cylinder mechanism comprises :
(a) a cylinder (13) located below said ball cage (24) ;
(b) a horizontal dividing wall (14) between said cylinder (13) and said ball cage (24), said dividing wall (14) having a vertical aperture;
(c) a piston head (37) slidably mounted within said cylinder (13) below said dividing wall (14) so that a first compression chamber (44) is formed within said cylinder (13) between said ball cage (24) and said dividing wall (14) and a second compression chamber (46) is formed between said dividing wall (14) and said piston head (37);
(d) a stud (29) slideably mounted in said aperture, said stud (29) having an upper end fixed to said ball cage (24) and a lower end fixed to said piston head (37);
(e) a first fluid fixture (48) operatively connected to said first compression chamber (44) for moving said ball cage (24) to said upper position; and
(f) a second fluid fixture (50) operatively connected to said second compression chamber (46) for moving said ball cage (24) to said lower position.

5. A ball-type anti-friction mechanism as recited in claim 4, further comprising:
(a) a second sealing ring (56) for forming a sliding seal between said piston head (37) and said cylinder (13); and
(b) a third sealing ring (54) at said vertical aperture for forming a sliding seal between said stud (29) and said dividing wall (14).

6. A ball-type anti-friction mechanism as claimed in claim 1 wherein said fluid actuator comprises:
(1) a horizontal wall (14) below said ball cage (24) for forming a compression chamber (44) between said ball cage (24) and said wall (14), said wall (14) having a vertical aperture;
(2) a fluid fixture (48) operatively connected to said compression chamber (44);
(3) a compression spring (76) located below said wall (14), said compression spring (76) having an upper end and a lower end; and
(4) a stud (65) which is slidably mounted in the aperture of said wall (14), said stud (65) having an upper end and a lower end, the upper end of said stud (65) being fixed to said ball cage (24) and the lower end of said stud (65) being operatively connected to the lower end of said compression spring (76) so that said stud (65) and said ball cage (24) are biased downwardly to said lower position by said compression spring (76).

7. A ball-type anti-friction device as recited in claim 6 further comprising:
(a) a stop (74) secured to the lower end of said stud (65); and
(b) a cup shaped retainer (64) which rests on said stop (74) and which has a top opening, the lower end of said compression spring (76) being located within said cup shaped retainer (64) and from said retainer (64) to said horizontal wall (14).

8. A ball-type anti-friction device as recited in claim 7, wherein the lower end of said stud (65) has a horizontal groove (72) and wherein said stop (74) is a retaining ring located in said groove (72).

9. A ball-type anti-friction mechanism as claimed in claim 1 wherein said platform (32) is bowl-shaped and has a bottom wall whose upper surface (34) is upwardly concave and whose lower surface is convex and parallel to said upper surface (34).

10. The ball-type anti-friction mechanism as claimed in claim 9 wherein said side wall (12) is a cylindrical side wall and wherein said flange (22) is annular.

11. The ball-type anti-friction mechanism as claimed in claim 9 wherein said ball cage (24) comprises a generally tubular cylindrical side wall (28).

12. The ball-type anti-friction mechanism as claimed in claim 9 further comprising a plurality of small bearing balls (36) disposed on said upper surface (34) of said platform (32), said ball (38) being disposed on said small bearing balls (36).

13. The ball-type anti-friction mechanism as claimed in claim 9 wherein said fluid actuator comprises a spring (76) for biasing said ball cage (24) to said lower position, a wall (14) below said ball cage (24) for forming a compression chamber (44) between said wall (14) and said ball cage (24), and a fluid fixture (48) operatively connected to said compression chamber (44).

## Patentansprüche

1. Kugel-Antifriktionsmechanismus (10, 60), enthaltend:
ein Gehäuse (11), wobei das Gehäuse (11) eine Seitenwand (12) hat, eine Kammer (16) und eine obere Öffnung (20) zu dieser Kammer (16);
einen innerhalb der Kammer (16) angeordneten Kugelkäfig (24) zur Bewegung zwischen einer unteren Position und einer oberen Position, wobei der Kugelkäfig (24) eine obere Öffnung (42) hat;
eine zur universalen Drehung innerhalb des Kugelkäfigs (24) derart angeordnete Kugel (38), dass sich ein kleinerer Teil der Kugel (38) aus der oberen Öffnung (42) heraus erstreckt, und dass sich die Kugel (38) unterhalb der oberen Öffnung (20) befindet, wenn sich der Kugelkäfig (24) in der unteren Position befindet und sich ein kleinerer Teil der Kugel (38) oberhalb der oberen Öffnung (20) befindet, wenn sich der Kugelkäfig (24) in der oberen Position befindet;
ein Fluid-Stellorgan zur selektiven Positionierung des Kugelkäfigs (24) in entweder die untere oder die obere Position; und
einen ersten Dichtring (52), der zwischen dem Kugelkäfig (24) und der Seitenwand (12) des Gehäuses (11) angeordnet ist, um eine gleitende Dichtung zwischen dem Kugelkäfig (24) und der Seitenwand (12) auszubilden,
**dadurch gekennzeichnet, dass** die Seitenwand (12) mit einem Flansch (22)aus einem Stück gefertigt ist, der sich nach auswärts von der oberen Öffnung (20) erstreckt und weiterhin **dadurch gekennzeichnet ist, dass** eine Plattform (32) zwischen dem Kugelkäfig (24) und der Kugel (38) angeordnet ist, die verwendet wird, um die Kugel (38) zu unterstützen.

2. Kugel-Antifriktionsmechanismus wie in Anspruch 1 beansprucht, worin das Gehäuse (11) weiterhin einen Boden (14) aufweist, welcher eine vertikale Öffnung hat; worin der Kugelkäfig (24) eine Druckkammer (44) zwischen dem Boden (14) und dem Kugelkäfig (24) ausbildet und worin das Fluid-Stellorgan umfasst
(1) einen Kolben (62), welcher gleitbar in der Öffnung des Bodens (14) angeordnet ist, wobei der Kolben (62) ein unteres Ende und ein oberes Ende hat, wobei an dem oberen Ende der Kugelkäfig (24) befestigt ist;
(2) einen Fluidanschluss (48), der operativ mit der Druckkammer verbunden ist, um den Kugelkäfig zu der oberen Position zu bewegen; und
(3) ein Rückstellorgan (76), um den Kugelkäfig (24) in die untere Position zu bewegen.

3. Kugel-Antifriktionsmechanismus wie in Anspruch 1 beansprucht, worin das Fluid-Stellorgan einen doppelt wirkenden, fluidbetriebenen Kolben- und Zylindermechanismus enthält.

4. Kugel-Antifriktionsmechanismus gemäß Anspruch 3, worin der doppelt wirkende Kolben- und Zylindermechanismus enthält:
(a) einen Zylinder (13), der unterhalb des Kugelkäfigs (24) angeordnet ist;
(b) eine horizontale Trennwand (14) zwischen dem Zylinder (13) und dem Kugelkäfig (24), wobei die Trennwand (14) eine vertikale Öffnung hat;
(c) einen Kolbenkopf (37), der unterhalb der Trennwand (14) gleitbar innerhalb des Zylinders (13) angeordnet ist, so dass eine erste Druckkammer (44) innerhalb des Zylinders (13) zwischen dem Kugelkäfig (24) und der Trennwand (14) ausgebildet wird und eine zweite Druckkammer (46) zwischen der Trennwand (14) und dem Kolbenkopf (37) ausgebildet wird;
(d) einen Bolzen (29), der gleitbar in der Öffnung angeordnet ist, wobei der Kolben (29) ein oberes Ende hat, welches an dem Kugelkäfig (24) befestigt ist, und ein unteres Ende am Kolbenkopf (37) befestigt ist;
(e) einen ersten Fluidanschluss (48), der operativ mit der ersten Druckkammer (44) verbunden ist, um den Kugelkäfig (24) in die obere Position zu bewegen; und
(f) einen zweiten Fluidanschluss (50), der operativ mit der zweiten Druckkammer (46) verbunden ist, um den Kugelkäfig (24) in die untere Position zu bewegen.

5. Kugel-Antifriktionsmechanismus gemäß Anspruch 4, weiterhin enthaltend:
(a) einen zweiten Dichtring (56), der zwischen dem Kolbenkopf (37) und dem Zylinder (13) angeordnet ist, um eine gleitende Dichtung auszubilden; und
(b) einen dritten Dichtring (54) an der vertikalen Öffnung, um eine gleitende Dichtung zwischen dem Bolzen (29) und der Trennwand (14) auszubilden.

6. Kugel-Antifriktionsmechanismus wie in Anspruch 1 beansprucht, worin das Fluid-Stellorgan umfasst:
(1) eine horizontale Wand (14) unterhalb des Kugelkäfigs (24) zur Ausbildung einer Druckkammer (44) zwischen dem Kugelkäfig und der Wand (14), wobei die Wand (14) eine vertikale Öffnung hat;
(2) einen Fluidanschluss (48), der operativ mit der Druckkammer (44) verbunden ist;
(3) eine Druckfeder (76), die unterhalb der Wand (14) angeordnet ist, wobei die Druckfeder (76)- ein oberes Ende und ein unteres Ende hat; und
(4) einen Bolzen (65), welcher gleitbar in der Öffnung der Wand (14) angeordnet ist, wobei der Bolzen (65) ein oberes Ende und ein unteres Ende hat, wobei das untere Ende des Bolzens (65) am Kugelkäfig (24) befestigt ist, und das untere Ende des Bolzens (65) operativ mit dem unteren Ende der Druckfeder (76) verbunden ist, so dass der Bolzen (65) und der Kugelkäfig (24) in der unteren Position durch die Druckfeder (76) vorgespannt sind.

7. Kugel-Antifriktionsmechanismus gemäß Anspruch 6, weiterhin enthaltend:
(a) einen Anschlag (74), der am unteren Ende des Bolzens (65) gesichert ist; und
(b) eine napfförmige Aufnahme (64), welche auf dem Anschlag (74) ruht und welche eine obere Öffnung hat, wobei das untere Ende der Druckfeder (76) innerhalb der napfförmigen Aufnahme (64) angeordnet ist und sich von der Aufnahme (64) zu der horizontalen Wand (14) hin erstreckt.

8. Kugel-Antifriktionsmechanismus gemäß Anspruch 7, worin das untere Ende des Bolzens (65) eine horizontale Nut (72) hat und worin der Anschlag (74) ein Rückhaltering ist, der innerhalb der Nut (72) angeordnet ist.

9. Kugel-Antifriktionsmechanismus wie in Anspruch 1 beansprucht, worin die Plattform (32) kugelförmig ist und eine Bodenwand hat, deren obere Oberfläche (34) aufwärts konkav ausgebildet ist und deren untere Oberfläche konvex und parallel zur oberen Oberfläche (34) ausgebildet ist.

10. Kugel-Antifriktionsmechanismus wie in Anspruch 9 beansprucht, worin die Seitenwand (12) eine zylindrische Wand ist und worin der Flansch (22) annular ist.

11. Kugel-Antifriktionsmechanismus wie in Anspruch 9 beansprucht, worin der Kugelkäfig (24) eine im Wesentlichen tubulare zylindrische Seitenwand (28) enthält.

12. Kugel-Antifriktionsmechanismus wie in Anspruch 9 beansprucht, weiterhin enthaltend eine Vielzahl von kleinen Lagerkugeln (36), die an der oberen Oberfläche (34) der Plattform (32) angeordnet sind und die Kugel (38) auf den kleinen Lagerkugeln (36) angeordnet ist.

13. Kugel-Antifriktionsmechanismus wie in Anspruch 9 beansprucht, worin das Fluid-Stellorgan eine Feder (76) umfasst, um den Kugelkäfig (24) in der unteren Position vorzuspannen, eine Wand (14) unterhalb des Kugelkäfigs (24), um eine Druckkammer (44) zwischen der Wand (14) und dem Kugelkäfig (24) auszubilden, und einen Fluidanschluss (48), der operativ mit der Druckkammer (44) verbunden ist.

## Revendications

1. Mécanisme (10, 60) antifriction à billes comportant :
un boîtier (11), ledit boîtier (11) comprenant une paroi latérale (12), un compartiment (16) et une ouverture (20) au sommet dudit compartiment (16) ;
une cage (24) à billes montée à l'intérieur dudit compartiment (16) en vue d'un mouvement entre une position inférieure et une position supérieure, ladite cage (24) à billes présentant une ouverture supérieure (42) ;
une bille (38) montée en vue d'une rotation universelle à l'intérieur de ladite cage (24) à billes de telle sorte qu'une portion minime de ladite bille (38) s'étende au-dessus de ladite ouverture supérieure (42), ladite bille (38) se trouvant au-dessous de ladite ouverture (20) de sommet lorsque ladite cage (24) à billes se trouve dans ladite position inférieure et une portion minime de ladite bille (38) se trouvant au-dessus de ladite ouverture (20) de sommet lorsque ladite cage (24) à billes se trouve dans ladite position supérieure ;
un actionneur à fluide destiné à positionner sélectivement ladite cage (24) à billes dans l'une desdites positions supérieure et inférieure ; et
une première bague d'étanchéité (52) positionnée entre ladite cage (24) à billes et ladite paroi latérale (12) dudit boîtier (11) pour former un joint coulissant entre ladite cage (24) à billes et ladite paroi latérale (12),
**caractérisé en ce que** ladite paroi latérale (12) est constituée d'une seule pièce, avec un flasque (22) s'étendant vers l'extérieur au niveau de ladite ouverture (20) de sommet, et **caractérisé de plus en ce qu'**une plate-forme (32) est positionnée entre ladite cage (24) à billes et ladite bille (38) afin d'être utilisée pour supporter ladite bille (38).

2. Mécanisme antifriction à billes selon la revendication 1, ledit boîtier (11) présentant en outre une paroi de fond (14) horizontale dotée d'un orifice vertical ; ladite cage (24) à billes définissant une chambre de compression (44) entre ladite paroi de fond (14) horizontale et ladite cage (24) à billes ; et ledit actionneur à fluide comportant
(1) un piston (62) monté de façon coulissante dans l'orifice de ladite paroi de fond (14) horizontale, ledit piston (62) présentant une extrémité inférieure et une extrémité supérieure, ladite extrémité supérieure étant fixée à ladite cage (24) à billes ;
(2) un raccord (48) à fluide relié fonctionnellement à ladite chambre de compression pour déplacer ladite cage à billes jusqu'à ladite position supérieure ; et
(3) un actionneur (76) de retour destiné à déplacer ladite cage (24) à billes jusqu'à ladite position inférieure.

3. Mécanisme antifriction à billes selon la revendication 1, ledit actionneur à fluide comportant un mécanisme à piston et cylindre à double effet actionné par un fluide.

4. Mécanisme antifriction à billes selon la revendication 3, ledit mécanisme à piston et cylindre à double effet comportant :
(a) un cylindre (13) situé au-dessous de ladite cage (24) à billes ;
(b) une paroi séparatrice (14) horizontale entre ledit cylindre (13) et ladite cage (24) à billes, ladite paroi séparatrice (14) présentant un orifice vertical ;
(c) une tête (37) de piston montée de façon coulissante à l'intérieur dudit cylindre (13) au-dessous de ladite paroi séparatrice (14) de telle sorte qu'une première chambre de compression (44) soit formée à l'intérieur dudit cylindre (13) entre ladite cage (24) à billes et ladite paroi séparatrice (14) et qu'une deuxième chambre de compression (46) soit formée entre ladite paroi séparatrice (14) et ladite tête (37) de piston ;
(d) un goujon (29) monté de façon coulissante dans ledit orifice, ledit goujon (29) présentant une extrémité supérieure fixée à ladite cage (24) à billes et une extrémité inférieure fixée à ladite tête (37) de piston ;
(e) un premier raccord (48) à fluide relié fonctionnellement à ladite première chambre de compression (44) pour déplacer ladite cage (24) à billes jusqu'à ladite position supérieure ; et
(f) un deuxième raccord (50) à fluide relié fonctionnellement à ladite deuxième chambre de compression (46) pour déplacer ladite cage (24) à billes jusqu'à ladite position inférieure.

5. Mécanisme antifriction à billes selon la revendication 4, comportant en outre :
(a) une deuxième bague d'étanchéité (56) destinée à former un joint coulissant entre ladite tête **(37)** de piston et ledit cylindre (13) ; et
(b) une troisième bague d'étanchéité (54) au niveau dudit orifice vertical pour former un joint coulissant entre ledit goujon (29) et ladite paroi séparatrice (14).

6. Mécanisme antifriction à billes selon la revendication 1, ledit actionneur à fluide comportant :
(1) une paroi (14) horizontale au-dessous de ladite cage (24) à billes pour former une chambre de compression (44) entre ladite cage (24) à billes et ladite paroi (14), ladite paroi (14) présentant un orifice vertical ;
(2) un raccord (48) à fluide relié fonctionnellement à ladite chambre de compression (44) ;
(3) un ressort (76) de compression situé au-dessous de ladite paroi (14), ledit ressort (76) de compression présentant une extrémité supérieure et une extrémité inférieure ; et
(4) un goujon (65) monté de façon coulissante dans l'orifice de ladite paroi (14), ledit goujon (65) présentant une extrémité supérieure et une extrémité inférieure, l'extrémité supérieure dudit goujon (65) étant fixée à ladite cage (24) à billes et l'extrémité inférieure dudit goujon (65) étant reliée fonctionnellement à l'extrémité inférieure dudit ressort (76) de compression de telle sorte que ledit goujon (65) et ladite cage (24) à billes soient sollicités vers le bas en direction de ladite position inférieure par ledit ressort (76) de compression.

7. Mécanisme antifriction à billes selon la revendication 6, comportant en outre .
(a) une butée (74) fixée à l'extrémité inférieure dudit goujon (65) ; et
(b) un élément de retenue (64) en forme de coupelle, reposant sur ladite butée (74) et présentant une ouverture de sommet, l'extrémité inférieure dudit ressort (76) de compression étant située à l'intérieur dudit élément de retenue (64) en forme de coupelle et ledit ressort (76) de compression s'étendant dudit élément de retenue (64) à ladite paroi (14) horizontale.

8. Mécanisme antifriction à billes selon la revendication 7, l'extrémité inférieure dudit goujon (65) présentant une gorge (72) horizontale et ladite butée (74) étant un anneau de retenue placé dans ladite gorge (72).

9. Mécanisme antifriction à billes selon la revendication 1, ladite plate-forme (32) présentant la forme d'une cuvette et étant dotée d'une paroi de fond dont la surface supérieure (34) est concave vers le haut et dont la surface inférieure est convexe et parallèle à ladite surface supérieure (34).

10. Mécanisme antifriction à billes selon la revendication 9, ladite paroi latérale (12) étant une paroi latérale cylindrique et ledit flasque (22) étant annulaire.

11. Mécanisme antifriction à billes selon la revendication 9, ladite cage (24) à billes comportant une paroi latérale (28) cylindrique généralement tubulaire.

12. Mécanisme antifriction à billes selon la revendication 9, comportant en outre une pluralité de petites billes (36) de roulement disposées sur ladite surface supérieure (34) de ladite plate-forme (32), ladite bille (38) étant disposée sur lesdites petites billes (36) de roulement.

13. Mécanisme antifriction à billes selon la revendication 9, ledit actionneur à fluide comportant un ressort (76) destiné à solliciter ladite cage (24) à billes jusqu'à ladite position inférieure, une paroi (14) située au-dessous de ladite cage (24) à billes et destinée à former une chambre de compression (44) entre ladite paroi (14) et ladite cage (24) à billes, et un raccord (48) à fluide relié fonctionnellement à ladite chambre de compression (44).
